# EUROPÄISCHE PATENTSCHRIFT

(11) **EP 1 930 696 B1**
(45) Veröffentlichungstag und Bekanntmachung des Hinweises auf die Patenterteilung: **10.12.2014**
(21) Anmeldenummer: 07021059.6
(22) Anmeldetag: 27.10.2007
(51) Int. Cl.: G01C 21/36, G06F 3/041, G06F 3/048

(54) **Verfahren und Vorrichtung zum Steuern der Anzeige von Informationen in zwei Bereichen auf einer Anzeigefläche in einem Verkehrsmittel**
Method and device for controlling the display of information in two areas on a display screen in a means of transport
Procédé et dispositif de commande de l'affichage d'informations dans deux zones d'une surface d'affichage d'un moyen de transport

(30) Priorität: 08.12.2006 DE 102006057924
(43) Veröffentlichungstag der Anmeldung: 11.06.2008
(73) Patentinhaber: Volkswagen Aktiengesellschaft, 38440 Wolfsburg (DE)
(72) Erfinder: Ebert, Andreas, 38104 Braunschweig (DE); Fliegner, Jens, 29399 Wahrenholz (DE); Bruns, Christian, 38102 Braunschweig (DE); Bonneberg, Martin, 38124 Braunschweig (DE)
(74) Vertreter: Reitstötter Kinzebach

(56) Entgegenhaltungen:
- EP-A1- 1 310 767
- EP-A1- 1 832 847
- WO-A1-00/23767
- DE-A1- 19 835 422
- JP-A- 2003 186 392
- US-A- 5 638 523
- US-A1- 2004 243 306
- US-A1- 2005 261 822
- US-A1- 2006 022 955
- US-A1- 2006 161 871
- US-B1- 6 401 034
- US-B2- 6 725 154

## Beschreibung

Die vorliegende Erfindung betrifft ein Verfahren zum Steuern der Anzeige auf einer Anzeigefläche einer Anzeigevorrichtung in einem Fahrzeug nach dem Oberbegriff des Anspruchs 1. Ferner betrifft die Erfindung ein Navigationssystem für ein Fahrzeug nach dem Oberbegriff des Anspruchs 6.

Verfahren und Vorrichtungen zum Steuern der Anzeige auf einer Anzeigefläche einer Anzeigevorrichtung werden beispielsweise in Fahrzeugnavigationssystemen eingesetzt. Die bei solchen Fahrzeugnavigationssystemen dargestellten Karten ermöglichen es dem Nutzer sich zu orientieren. Außerdem kann eine von dem Fahrzeugnavigationssystem berechnete Route in der Karte dargestellt werden. Die in dem Fahrzeug dargestellten Karten können jedoch nicht nur zur Orientierung dienen, sondern auch zur Darstellung weiterer Informationen zu dem auf der Anzeigefläche dargestellten Karteninhalt oder anderer Zusatzinformationen mit Hilfe sog. Sonderziele (Points of Interest) und anderen Elementen für Zusatzinformationen.

Außerdem gibt es Navigationssysteme, die einen Teil der dargestellten Karte vergrößert anzeigen können, wobei jedoch der Rest der Karte weiterhin in einem kleineren Maßstab dargestellt wird, damit sich der Nutzer weiterhin gut orientieren kann. In der DE 101 55 549 A1 wird beispielsweise ein Navigationsgerät beschrieben, mit dem eine Übersichtskarte und ein vergrößerter Ausschnitt der Übersichtskarte gleichzeitig auf einem Bildschirm dargestellt werden kann. Bei diesem Navigationsgerät kann mittels einer Graphiksteuereinheit die Übersichtskarte und der vergrößerte Ausschnitt synchron miteinander auf dem Bildschirm verschoben werden.

In der EP 1310767 A1 wird ein Verfahren zur Navigation mittels eines Navigationsgerätes beschrieben. Dabei wird auf einem Bildschirm eine Übersichtskarte in einem kleineren Maßstab dargestellt. Auf dieser Übersichtskarte wird ein Ausschnitt ausgewählt, der in vergrößertem Maßstab gleichzeitig mit der Übersichtskarte dargestellt wird.

Die US 5,638,523 beschreibt ein Verfahren und eine Vorrichtung zum Durchsuchen einer Computerdatenbank eines Computersystems mit einer graphischen Nutzerschnittstelle. Dabei wird auf dem Bildschirm als Hintergrundinformation eine geographische Karte angezeigt. Über diese Karte kann ein virtuelles Werkzeug bewegt werden. Diesem Werkzeug können verschiedene Funktionen zugeordnet werden, unter anderem kann das Werkzeug in eine Vergrößerungsbetriebsart gebracht werden. In diesem Fall wird in einem Teilbereich die geographische Karte in einem vergrößerten Maßstab angezeigt.

In der JP 2003186392 A wird ein weiteres Verfahren zum Anzeigen einer geographischen Karte beschrieben. Dabei ist es möglich den Bildschirm zu unterteilen, so dass verschiedene Maßstäbe in dem unterteilten Bildschirm angezeigt werden.

Schließlich sind in der US 2005/0261822 A1 und der US 2004/0243306 A1 weitere Verfahren zur Darstellung geographischer Karten sowie Navigationssysteme beschrieben.

Es ist die Aufgabe der vorliegenden Erfindung, ein Verfahren und ein Navigationssystem der eingangs genannten Art bereitzustellen, bei denen der Nutzer oder eine externe Einheit die Anzeige des Hintergrundbereichs und des Teilbereichs flexibel steuern kann, damit dem Nutzer auf vielfältige Weise Informationen über die Anzeigefläche der Anzeigevorrichtung bereitgestellt werden können.

Erfindungsgemäß wird diese Aufgabe durch ein Verfahren mit den Merkmalen des Anspruchs 1 und ein Navigationssystem mit den Merkmalen des Anspruchs 6 gelöst. Vorteilhafte Aus- und Weiterbildungen ergeben sich aus den Unteransprüchen.

Das erfindungsgemäße Verfahren ist dadurch gekennzeichnet, dass Eingaben eines Nutzers zum Erzeugen des Eingangssignals dadurch erfolgen, dass ein Objekt in die Nähe der Anzeigefläche gebracht wird, wobei die Position des Objekts erfasst wird, wobei das Eingangssignal in Abhängigkeit von dem Abstand des Objekts von der Anzeigefläche erzeugt wird, und wobei der Maßstab des Anzeigeinhalts in dem Teilbereich oder dem Hintergrundbereich dadurch verändert wird, dass man das Objekt dem jeweiligen Bereich der Anzeigefläche annähert, wobei der Maßstab des Anzeigeinhalts in dem jeweiligen Bereich mit zunehmender Annäherung des Objekts zunehmend vergrößert wird.

Es kann somit zum einen die Position des Teilbereichs in der Anzeigefläche verschoben werden, wobei der Anzeigeinhalt des Hintergrundbereichs unverändert bleibt. Es ändert sich nur der sichtbare Teil des Hintergrundbereichs insofern, als dass durch die Verschiebung des Teilbereichs andere Bereiche des Hintergrundbereichs überdeckt werden. Gleichzeitig ändert sich der Anzeigeinhalt in dem verschobenen Teilbereich insofern, als dass immer zumindest ein Teil des gerade überdeckten Anzeigeinhalts des Hintergrundbereichs auf andere Art dargestellt wird.

Zum anderen kann der Anzeigeinhalt des Hintergrundbereichs relativ zum Teilbereich in der Anzeige verschoben werden, wenn im Hintergrundbereich ein Ausschnitt eines größeren Darstellungsbildes angezeigt wird und dieser Ausschnitt durch Verschieben des Hintergrundbereichs verändert wird. Dabei bleibt die Position des Teilbereichs in der Anzeigefläche unverändert. Jedoch ändert sich der Anzeigeinhalt in dem Teilbereich, da beim Verschieben des Anzeigeinhalts des Hintergrundbereichs der Teilbereich jeweils einen anderen Teil des Hintergrundbereichs überdeckt und jeweils zumindest ein Teil in dem Teilbereich im Vordergrund auf andere Art dargestellt wird.

Erfindungsgemäß stellt der Anzeigeinhalt in dem Teilbereich zumindest einen Teil des von dem Teilbereich überdeckten Anzeigeinhalt des Hintergrundbereichs in einem anderen Maßstab dar, als in dem Hintergrundbereich. Die andersartige Darstellung betrifft in diesem Fall den Maßstab des Anzeigeinhalts in dem Teilbereich und in dem Hintergrundbereich. Der Teilbereich wirkt somit relativ zum Hintergrundbereich als Optik, die den überdeckten Bereich des Hintergrundbereichs vergrößert oder verkleinert darstellt.

Erfindungsgemäß wird in Abhängigkeit von einem Eingangssignal der Maßstab der Anzeige in dem Teilbereich oder der Maßstab der Anzeige in dem Hintergrundbereich verändert. Ferner kann in Abhängigkeit von einem weiteren Eingangssignal die Größe und/oder die Form des Teilbereichs verändert werden, wobei in diesem Fall bevorzugt der Maßstab des Anzeigeinhalts in dem Teilbereich unverändert bleibt.

Das Eingangssignal wird erfindungsgemäß auf der Basis einer Eingabe eines Nutzers erzeugt.

Die Eingaben eines Nutzers zum Erzeugen des Eingangssignals können z.B. dadurch erfolgen, dass ein Objekt oder mehrere Objekte die Anzeigefläche berührt bzw. berühren oder in die Nähe der Anzeigefläche gebracht wird bzw. werden, wobei die Position des Objekts oder der Objekte erfasst wird bzw. werden. Bei dem Objekt kann es sich insbesondere um einen oder mehrere Finger eines Nutzers handeln, welche in die Nähe der Anzeigefläche bzw. in Kontakt mit der Anzeigefläche gebracht werden, um die Anzeige auf der Anzeigefläche der Anzeigevorrichtung zu verändern.

Erfindungsgemäß wird der Maßstab des Anzeigeinhalts in dem Teilbereich oder in dem Hintergrundbereich dadurch verändert, dass man das Objekt, insbesondere den Finger eines Nutzers, dem jeweiligen Bereich der Anzeigefläche annähert. Erfindungsgemäß kann ein Nutzer den Maßstab des Anzeigeinhalts in dem Teilbereich dadurch vergrößern, dass er seinen Finger immer weiter an den in der Anzeigefläche dargestellten Teilbereich annähert.

Als Anzeigeinhalt werden erfindungsgemäß geographische Informationen angezeigt. Beispielsweise kann in dem Teilbereich eine geographische Detailkarte einer überdeckten geographischen Karte des Hintergrundbereichs angezeigt werden.

Die andersartige Darstellung des Anzeigeinhalts in dem Teilbereich und in dem Hintergrundbereich kann außerdem die Kartenarten betreffen, die im Teilbereich und im Hintergrundbereich verwendet werden. Als Darstellungsarten können z. B. Straßenkarten und Luftbildaufnahmen verwendet werden. Ferner können die Darstellungsarten Stadtplankarten, historische Karten, die das geographische Gebiet zu einem früheren Zeitpunkt zeigen, für Kinder geeignete Karten und Spezialkarten für bestimmte Themen, wie z.B. Karten für das Wetter, umfassen. Die Darstellungen können dabei in dem gleichen Maßstab oder in einem anderen Maßstab erfolgen.

Ferner kann bevorzugt die Detailkarte mehr Zusatzinformationen, wie z.B. Sonderziele, als die Karte des Hintergrundbereichs enthalten. Schließlich kann die Detailkarte die Zusatzinformationen auch auf andere Art darstellen, als die Karte des Hintergrundbereichs.

Das erfindungsgemäße Navigationssystem ist dadurch gekennzeichnet, dass die Eingabeeinheit einen Näherungssensor umfasst, mit dem der Abstand eines Objekts von der Anzeigefläche erfassbar ist, wobei Eingaben eines Nutzers zum Erzeugen des Eingangssignals dadurch erfolgen, dass ein Objekt in die Nähe der Anzeigefläche gebracht wird, wobei die Position des Objekts erfasst wird, und der Maßstab des Anzeigeinhalts in dem Teilbereich oder dem Hintergrundbereich dadurch verändert wird, dass das Objekt dem jeweiligen Bereich der Anzeigefläche angenähert wird, wobei der Maßstab des Anzeigeinhalts in dem jeweiligen Bereich mit zunehmender Annäherung des Objekts zunehmend vergrößert wird.

Vorzugsweise ist mittels des Eingabesignals die Größe und/oder die Form des Teilbereichs veränderbar.

Die Steuervorrichtung kann eine Schnittstelle zur Übertragung von Eingangssignalen anderer Einrichtungen umfassen. Ferner kann die erfindungsgemäße Steuervorrichtung eine Eingabeeinheit für Eingaben eines Nutzers und zum Erzeugen des Eingangssignals umfassen. Gemäß einer bevorzugten Ausgestaltung des erfindungsgemäßen Navigationssystems ist die Eingabeeinheit eine Einrichtung zum Erfassen der Position eines Objekts oder mehrerer Objekte innerhalb des Verkehrsmittels. Die Position dieses Objekts ist insbesondere vor der Anzeigefläche. Bei dem Objekt kann es sich insbesondere um den Finger eines Benutzers handeln. Die Eingabe kann somit dadurch erfolgen, dass der Finger des Benutzers in bestimmte Positionen vor der Anzeigefläche gebracht wird. Die Anzeige auf der Anzeigefläche der Anzeigevorrichtung kann somit einfach, schnell und intuitiv gesteuert werden. Es ist dabei insbesondere nicht erforderlich, dass der Benutzer über Tastschalter, Drehknöpfe oder andere körperliche Eingabeeinrichtungen die Bedienung durchführt.

Die Positionserfassungseinrichtung kann eine berührungsempfindliche Oberfläche der Anzeigefläche sein. Bei der Positionserfassungseinrichtung kann es sich beispielsweise um eine resistive und/oder kapazitive Touchfolie handeln. Ferner kann die Positionserfassungseinrichtung eine piezoelektrische Folie sein. Schließlich ist es möglich, dass mit der Positionserfassungseinrichtung der Wärmestrom bei der Berührung einer Folie mit dem Finger messbar ist. Es kann somit die Berührung eines Objekts, insbesondere eines Fingers eines Benutzers, auf der Anzeigefläche detektiert werden. Die Position der Berührung des Fingers kann dann in einen Zusammenhang mit dem aktuellen Anzeigeinhalt gebracht werden, woraus ein Steuersignal gewonnen wird.

Gemäß einer anderen Ausgestaltung detektiert die Positionserfassungseinrichtung die Bewegung eines Fingers eines Benutzers. Dabei ist es nicht erforderlich, dass der Finger die Anzeigefläche berührt. Vielmehr ist es ausreichend, dass der Finger in einem Abstand vor der Anzeigefläche bewegt wird.

Die Eingabeeinheit umfasst bevorzugt eine Einrichtung zum Erzeugen des Eingangssignals, mit der in Abhängigkeit von der erfassten Position des Objekts, insbesondere des Fingers des Nutzers, und in Abhängigkeit von dem Anzeigeinhalt das Eingangssignal erzeugbar ist.

Erfindungsgemäß umfasst die Eingabeeinheit einen Näherungssensor, mit dem der Abstand eines Objekts, insbesondere eines Fingers eines Nutzers, von der Anzeigefläche erfassbar ist. Das Eingangssignal wird dann in Abhängigkeit von dem Abstand des Objekts von der Anzeigefläche erzeugt.

Des Weiteren sind mittels der Graphiksteuereinheit Anzeigedaten erzeugbar, die in dem Teilbereich eine geographische Detailkarte einer überdeckten geographischen Karte des Hintergrundbereichs darstellen.

Die Erfindung wird nun anhand von Ausführungsbeispielen mit Bezug zu den Zeichnungen erläutert.
- Fig. 1: zeigt ein Anzeigesystem, welches ein erstes Ausführungsbeispiel der Steuervorrichtung des erfindungsgemäßen Navigationssystems umfasst,
- Fig. 2: zeigt ein Anzeigesystem, das ein zweites Ausführungsbeispiel der Steuervorrichtung des erfindungsgemäßen Navigationssystems umfasst,
- Fig. 3: zeigt schematisch zwei Ansichten auf der Anzeigefläche einer Anzeigevorrichtung, wie sie durch ein Ausführungsbeispiel des erfindungsgemäßen Verfahrens erzeugt wurden und die
- Fig. 4 bis 7: zeigen weitere Ansichten auf einer Anzeigefläche einer Anzeigevorrichtung, wie sie durch Ausführungsbeispiele des erfindungsgemäßen Verfahrens erzeugt wurden.

Die Steuervorrichtung umfasst eine Graphiksteuereinheit 1 sowie einen Speicher 10, auf welchem die Graphiksteuereinheit zugreifen kann. Die Graphiksteuereinheit 1 ist mit einer Anzeigevorrichtung 2 verbunden. Bei der Anzeigevorrichtung 2 kann es sich beispielsweise um ein Flüssigkristalldisplay, um ein Plasmadisplay oder ein anderes geeignetes Display handeln, welches in einem Verkehrsmittel, insbesondere in einem Kraftfahrzeug, einsetzbar ist.

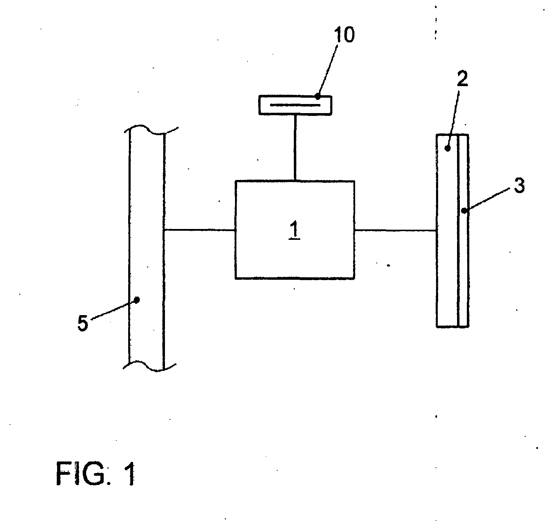

Für die Bedienung der Steuervorrichtung ist in dem in Fig. 1 gezeigten ersten Ausführungsbeispiel vor der Anzeigefläche der Anzeigevorrichtung 2 eine berührungsempfindliche Folie 3 vorgesehen. Mit der Folie 3 kann die Position der Berührung eines Objekts detektiert werden. Die Position der Berührung kann dann im Zusammenhang mit dem gerade dargestellten Anzeigeinhalt auf der Anzeigefläche der Anzeigevorrichtung 2 gebracht werden und hieraus ein Steuersignal gewonnen werden, welches als Eingangssignal der Graphiksteuereinheit 1 übertragen wird. Die Folie 3 kann z.B. als resistive Touchfolie, kapazitive Touchfolie oder piezoelektrische Folie ausgebildet sein. Ferner kann die Folie 3 so ausgebildet sein, dass ein Wärmestrom, der z.B. von dem Finger eines Nutzers ausgeht, gemessen wird.

Die Graphiksteuereinheit 1 ist ferner mit einem Fahrzeugbus 5 verbunden. Über diesen Fahrzeugbus 5 können auch Eingangssignale, z.B. von einem Navigationssystem, an die Graphiksteuereinheit 1 übertragen werden.

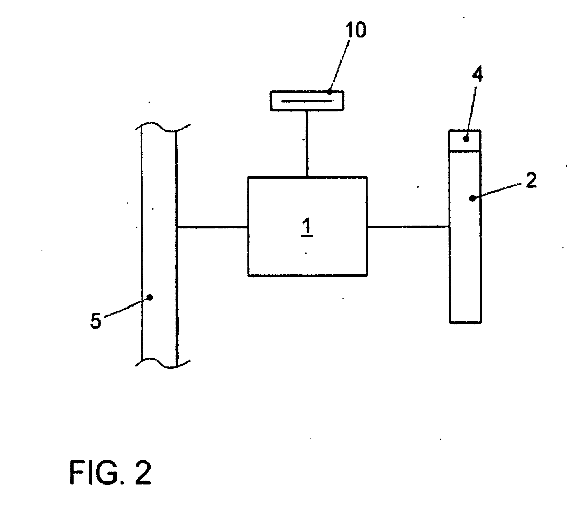

Fig. 2 zeigt ein zweites Ausführungsbeispiel, bei dem nicht wie beim ersten Ausführungsbeispiel eine berührungsempfindliche Folie als Eingabeeinheit verwendet wird, sondern eine Einrichtung 4, mit welcher die dreidimensionale Position eines Objekts in einem bestimmten Aufenthaltsbereich vor der Anzeigefläche der Anzeigevorrichtung 2 erfasst werden kann, ohne dass es erforderlich ist, dass die Anzeigefläche berührt wird. Der zugelassene Aufenthaltsbereich hängt von der Anordnung der Anzeigefläche der Anzeigevorrichtung 2 in dem Kraftfahrzeug ab. Der Bereich sollte so gewählt sein, dass der Aufenthalt eines Objekts, wie z. B. der Finger eines Benutzers, in diesem Aufenthaltsbereich eindeutig mit einer Bedienung der Steuervorrichtung in Verbindung gebracht werden kann. Die Grenze des Aufenthaltsbereichs kann z. B. 40 cm bis 10 cm vor der Anzeigefläche der Anzeigevorrichtung 2 liegen.

Die Positionserfassungseinrichtung 4 des zweiten Ausführungsbeispiels kann z. B. Infrarotlichtquellen und Infrarotlichtdetektoren umfassen. Details der Positionserfassungseinrichtung sind in der DE 100 58 244 C2 beschrieben. Weitere Positionserfassungseinrichtungen, die bei dem zweiten Ausführungsbeispiel eingesetzt werden können, sind in folgenden Veröffentlichungen beschrieben: DE 103 05 341 A1 und DE 10 2004 048 956 A1.

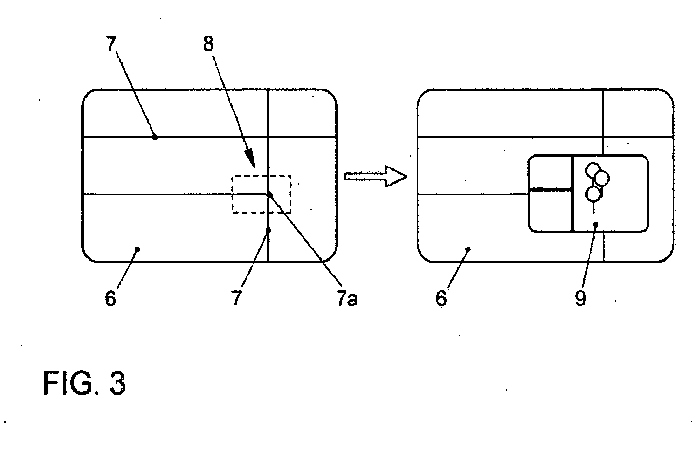

Mit Bezug zu Fig. 3 wird die Ausbildung und Funktionsweise der Graphiksteuereinheit im Detail erläutert:

In dem Speicher 10 sind geographische Daten in verschiedenen Darstellungsarten gespeichert. Beispielsweise sind verschiedene Straßenkarten in unterschiedlichen Maßstäben einschließlich Stadtplankarten sowie für Kinder geeignete Karten gespeichert. Ferner können Luftbildaufnahmen und historische Karten gespeichert sein. Der Graphiksteuereinheit 1 wird über den Fahrzeugbus 5 von einer externen Einheit die aktuelle Position des Verkehrsmittels, welches die erfindungsgemäße Steuervorrichtung umfasst, auf an sich bekannte Weise übermittelt. Ferner können der Graphiksteuereinheit 1 weitere Informationen, wie eine Route und bestimmte Vorgaben für die Darstellung der geographischen Karte, wie z.B. ein Default-Maßstab, übertragen werden. Auf der Basis dieser Informationen lädt sich die Graphiksteuereinheit 1 aus dem Speicher 10 z.B. den Ausschnitt einer Straßenkarte oder eines Luftbildes herunter und erzeugt hieraus Daten für die Anzeige eines Hintergrundbereichs der Anzeigefläche der Anzeigevorrichtung 2.

Der Nutzer kann nun über die berührungsempfindliche Folie 3 oder über die Einrichtung 4 zum Erfassen der Position des Fingers vor der Anzeigefläche eine Position des aktuell angezeigten Hintergrundbereichs auswählen. Hierfür wird die Position des Fingers dem aktuellen Anzeigeinhalt auf der Anzeigefläche zugeordnet und hieraus ein Eingangssignal für die Graphiksteuereinheit 1 erzeugt. Aus diesem Eingangssignal erzeugt die Graphiksteuereinheit 1 Daten für die Anzeige in einem Teilbereich 9 der Anzeigefläche. Dieser Teilbereich umfasst die Position, die von der Folie 3 bzw. der Einrichtung 4 erfasst worden ist. Die Größe des Teilbereichs 9 kann auf der Basis von voreingestellten Werten erfolgen. Ferner ist es möglich, dass der Nutzer bei der Eingabe die Größe vorgibt, indem er z.B. mit der Bewegung seines Fingers die Größe auf der Anzeigefläche beschreibt.

Der Teilbereich 9 überdeckt den Anzeigeinhalt des Hintergrundbereichs 6, so dass dessen Anzeigeinhalt beim Teilbereich 9 nicht mehr dargestellt wird. Der Anzeigeinhalt in dem Teilbereich 9 hängt jedoch vom Anzeigeinhalt zumindest eines Teils des Anzeigeinhalts des Hintergrundbereichs ab, der von dem Teilbereich 9 überdeckt wird. In dem Teilbereich 9 wird nämlich ein Teil des überdeckten Anzeigeinhalts des Hintergrundbereichs 6 auf andere Art, insbesondere in einem anderen Maßstab oder als anderer Kartentyp dargestellt. Bei der Darstellung in einem anderen Maßstab wird ein Teil des überdeckten Anzeigeinhalts des Hintergrundbereichs 6 vergrößert dargestellt.

In Fig. 3 ist in der linken Abbildung gezeigt, dass zunächst im Hintergrundbereich 6 die Straßen 7 dargestellt werden. Der Nutzer wählt nun die Straßenabzweigung 7a aus. Zu dieser Abzweigung 7a möchte er eine Detailansicht erhalten. Die Graphiksteuereinheit 1 erzeugt aus diesem Eingangssignal den von der gestrichelten Linie umfassten Bereich 8. Zu dem Anzeigeinhalt dieses Bereichs 8 lädt sich die Graphiksteuereinheit aus dem Speicher 10 eine Ansicht in einem größeren Maßstab. Hieraus erzeugt die Graphiksteuereinheit 1 die Daten für die Anzeige in dem Teilbereich 9. Da der Anzeigeinhalt in dem Bereich 8 des Hintergrundbereichs 6 in einem größeren Maßstab dargestellt wird, ist der Teilbereich 9 größer als der Bereich 8. Dieser Teilbereich 9 wird, wie auf der rechten Seite der Fig. 3 gezeigt, auf der Anzeigefläche so dargestellt, dass die Abzweigung 7a und der von der gestrichelten Linie umgrenzte Bereich 8 überdeckt sind. Aufgrund der Darstellung in dem anderen Maßstab passen zwar die Anschlüsse am Übergang von dem Teilbereich 9 zum Hintergrundbereich 6 nicht mehr exakt zusammen. Der Nutzer erhält jedoch in dem Teilbereich 9 eine Detailansicht für den Bereich 8, der für den Nutzer besonders relevant ist. Gleichzeitig kann er sich weiterhin an der geographischen Karte des Hintergrundbereichs orientieren.

In der Detailkarte des Teilbereichs 9 wird insbesondere nicht nur eine vergrößerte Ansicht eines Bereichs der Hintergrundkarte 6 angezeigt. Es können vielmehr auch andere Informationen als auf der Hintergrundkarte angezeigt werden. Beispielsweise können in der Detailkarte des Teilbereichs 9 bestimmte Sonderziele oder andere Zusatzinformationen angezeigt werden. Außerdem können in der Detailkarte Sonderziele, die bereits in der Hintergrundkarte 6 verzeichnet sind, auf andere Art, insbesondere detaillierter, dargestellt werden. Ferner kann eine andere Kartenart angezeigt werden. Beispielsweise kann in dem Teilbereich 9 einen Luftbildaufnahme angezeigt werden, wenn in dem Hintergrundbereich eine Straßenkarte angezeigt wird und umgekehrt in dem Teilbereich 9 eine Straßenkarte angezeigt werden, wenn in dem Hintergrundbereich 6 ein Luftbild angezeigt wird.

Der Nutzer kann nun mit der Steuervorrichtung interagieren, um die dargestellten Anzeigeinhalte zu verändern. Die Interaktion kann über eine externe Bedieneinheit erfolgen, deren Signale über den Fahrzeugbus 5 an die Graphiksteuereinheit 1 übertragen werden. Die Interaktion kann jedoch auch über die berührungsempfindliche Folie 3 oder die Einrichtung 4 zum Erfassen der Position, z.B. eines Fingers des Nutzers vor der Anzeigefläche erfolgen.

### Der Nutzer kann den Anzeigeinhalt des Hintergrundbereichs wie folgt verändern:

Im Hintergrundbereich 6 wird ein Ausschnitt einer größeren digitalen Karte dargestellt. Diesen Ausschnitt kann der Nutzer verändern, er kann ihn insbesondere verschieben. Die Position des Teilbereichs 9 bleibt dabei die gleiche, so dass der Anzeigeinhalt des Hintergrundbereichs 6 relativ zum Teilbereich 9 verschoben wird. Z.B. kann der Nutzer auf der berührungsempfindlichen Folie 3 mit dem Finger über den Hintergrundbereich 6 in eine bestimmte Richtung fahren. Der Anzeigeinhalt des Hintergrundbereichs wird in diesem Fall von der Graphiksteuereinheit 1 fortwährend so erzeugt, dass die Anzeigeinhalte der Bewegung des Fingers des Nutzers folgt. Gleichzeitig verändert die Graphiksteuereinheit 1 den Anzeigeinhalt des Teilbereichs 9 derart, dass weiterhin der von der gestrichelten Linie umgrenzte Bereich 8 des Hintergrundbereichs 6 in dem Teilbereich 9 vergrößert dargestellt wird. Da sich der Anzeigeinhalt des Bereichs 8 beim Verschieben des Anzeigeinhalts des Hintergrundbereichs 6 verändert, verändert sich auch der Anzeigeinhalt in dem Teilbereich 9. Der Teilbereich 9 wirkt in diesem Fall als Lupe, welche auf den darunter liegenden Hintergrundbereich 6 gerichtet ist.

Ferner kann der Nutzer gemäß der Erfindung den Maßstab des Anzeigeinhalts des Hintergrundbereichs 6 verändern. Hierfür ist in der Einrichtung 4 bzw., bei dem in Fig. 1 gezeigten Beispiel, als separate Einheit ein Näherungssensor vorgesehen, welcher die Annäherung des Fingers eines Nutzers detektieren kann. Nähert sich der Finger des Nutzers dem Hintergrundbereich 6 an, wenn sich die Steuervorrichtung in einem Zoom-Modus befindet, verändert die Graphiksteuereinheit 1 mit zunehmender Annäherung des Fingers des Nutzers den Maßstab des Hintergrundbereichs 6, so dass im Hintergrundbereich 6 weitere Details erkennbar werden. Gleichzeitig verändert die Graphiksteuereinheit 1 die Anzeige in dem Teilbereich 9, so dass das Maßstabsverhältnis zwischen dem Anzeigeinhalt in dem Teilbereich 9 und in dem Hintergrundbereich 6 konstant bleibt.

Ferner kann der Nutzer auch die Position des Teilbereichs 9 in der Anzeigefläche verschieben. Beispielsweise kann er die berührungsempfindliche Folie 3 im Teilbereich 9 berühren und daraufhin den Finger in eine bestimmte Richtung auf der Anzeigefläche bewegen. Die Graphiksteuereinheit 1 erzeugt daraufhin veränderte Daten für die Anzeige des Hintergrundbereichs 6 und des Teilbereichs 9. Die Position des Teilbereichs 9 wird in der Anzeigefläche verschoben, wobei der Anzeigeinhalt des Hintergrundbereichs gleich bleibt, außer dass andere Bereiche von dem Teilbereich 9 überdeckt werden. Gleichzeitig erzeugt die Graphiksteuereinheit 1 für den Teilbereich 9 fortwährend einen Anzeigeinhalt, so dass er immerfort einen Teilbereich des überdeckten Anzeigeinhalts des Hintergrundbereichs 6 in dem Maßstab für den Teilbereich 9 darstellt. Auf gleiche Weise kann der Nutzer auch die Größe und die Form des Teilbereichs 9 verändern, wobei auch in diesem Fall der Anzeigeinhalt für den Hintergrundbereich 6 und für den Teilbereich 9 entsprechend angepasst wird. Des Weiteren kann der Nutzer auch, wie beim Hintergrundbereich 6, den Maßstab für den Anzeigeinhalt des Teilbereichs 9 verändern.

Für die verschiedenen Bedienmöglichkeiten können auch in dem Teilbereich 9 oder im Hintergrundbereich 6 Bedienelemente angezeigt werden, die dann mit dem Finger des Nutzers bedient werden können. Es ist auch möglich, dass die berührungsempfindliche Folie 3 oder die Einrichtung 4 mehrere Finger eines Nutzers gleichzeitig erkennen kann, um z.B. einen bestimmten Ausschnitt für die Detailkarte des Teilbereichs 9 auszuwählen.

Außerdem ist es nicht erforderlich, dass, wie in Fig. 3 gezeigt, eine scharfe Abgrenzung zwischen dem Anzeigeinhalt des Teilbereichs 9 und dem Anzeigeinhalt des Hintergrundbereichs 6 erfolgt. Es wäre auch möglich, dass die beiden Anzeigeinhalte, insbesondere die Karten in den verschiedenen Maßstäben, fließend ineinander übergehen.

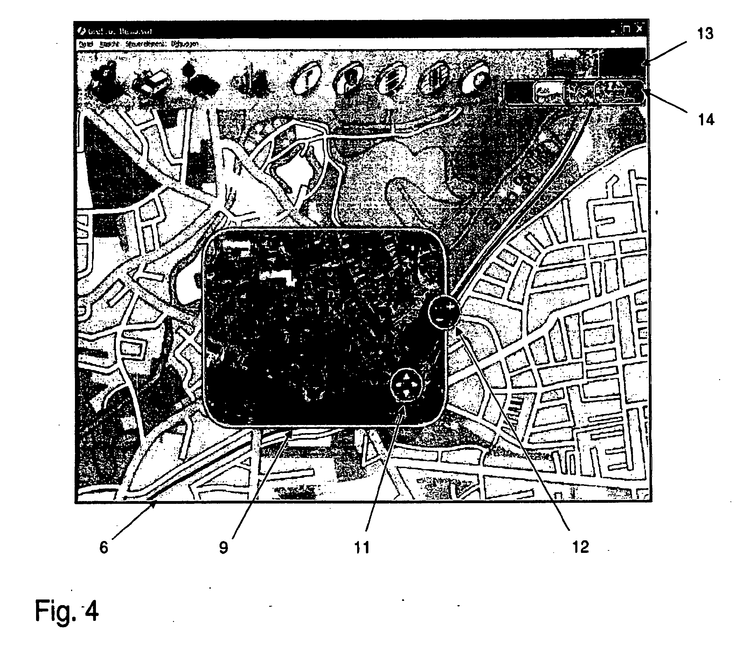

In Fig. 4 ist im Hintergrundbereich 6 eine Straßenkarte gezeigt und in dem Teilbereich 9 einen Luftbildaufnahme in einem vergrößerten Maßstab. Ferner sind in der Anzeigefläche Bedienelemente 11 bis 14 angezeigt. Das Bedienelement 11 dient zum Verändern der Form des Teilbereichs 9, das Bedienelement 12 dient zum Verändern des dargestellten Maßstabs in dem Teilbereich 9, das Bedienelement 13 dient zum Wechseln der Darstellungsart im Hintergrundbereich 6 und das Bedienelement 14 dient zum Wechseln der Darstellungsart im Teilbereich 9.

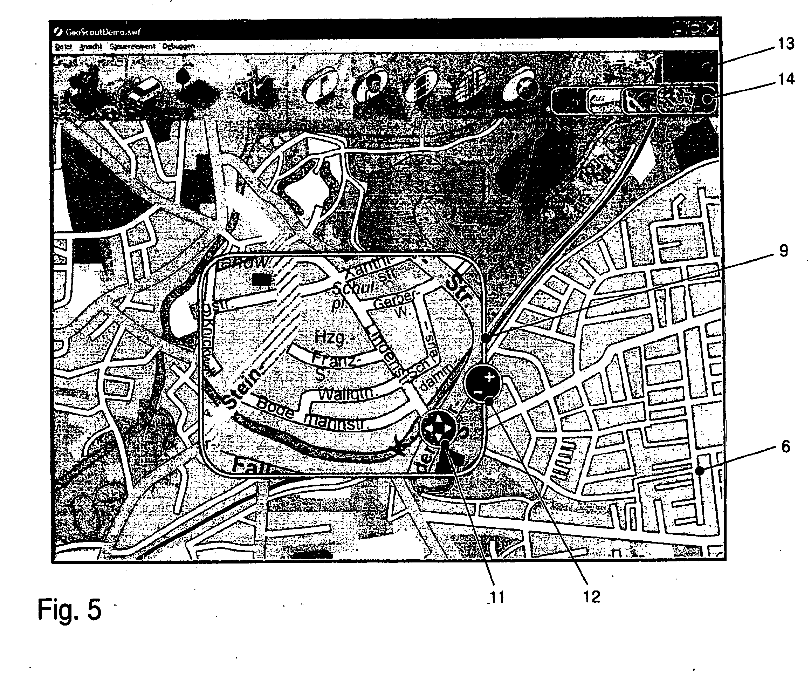

In Fig. 5 ist eine Ansicht gezeigt, bei der im Hintergrundbereich 6 eine Straßenkarte mit einem ersten Maßstab dargestellt ist und im Teilbereich 9 eine Straßenkarte mit einem zweiten, größeren Maßstab. Ferner sind, wie bei dem in Fig. 4 gezeigten Beispiel, die Bedienelemente 11 bis 14 dargestellt.

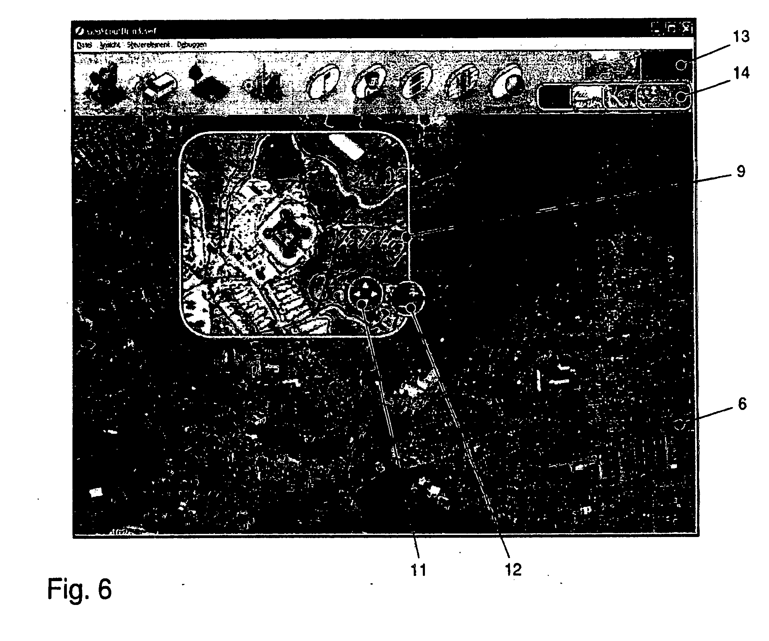

In Fig. 6 ist in dem Hintergrundbereich 6 eine Satellitenkarte dargestellt und in dem Teilbereich 9 eine historische Karte in einem vergrößerten Maßstab. Auch in diesem Fall sind die Bedienelemente 11 bis 14 dargestellt.

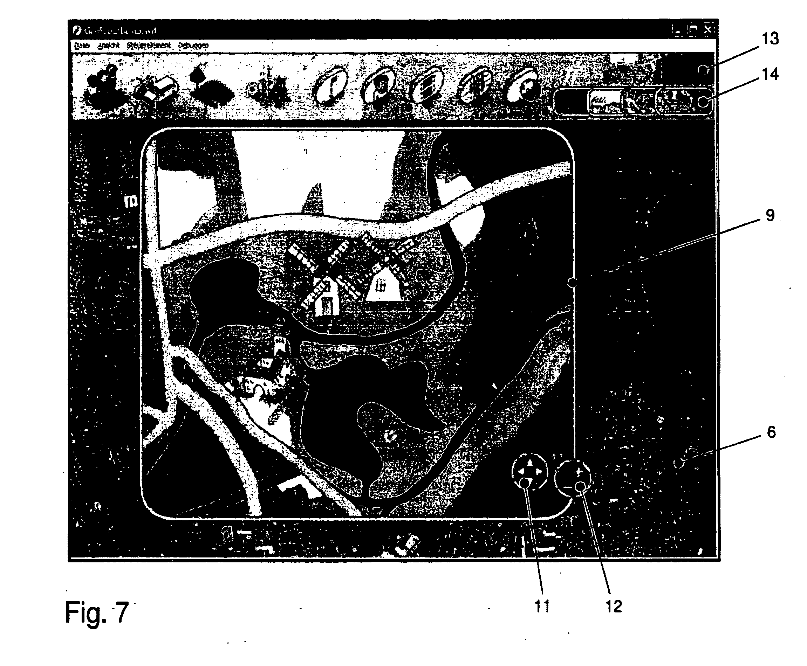

In Fig. 7 ist in dem Hintergrundbereich 6 eine Satellitenkarte dargestellt und im Teilbereich 9 eine kindgerechte Straßenkarte. Auch in diesem Fall sind die Bedienelemente 11 bis 14 dargestellt.

### Bezugszeichenliste

- 1: Graphiksteuereinheit
- 2: Anzeigevorrichtung
- 3: berührungsempfindliche Folie
- 4: Einrichtung zum Erfassen der Position eines Fingers
- 5: Fahrzeugbus
- 6: Hintergrundbereich
- 7: Darstellung einer Straße
- 7a: Darstellung einer Abzweigung
- 8: Bereich des Hintergrundbereichs
- 9: Teilbereich
- 10: Speicher
- 11: Bedienelement
- 12: Bedienelement
- 13: Bedienelement
- 14: Bedienelement

## Patentansprüche

1. Verfahren zum Steuern der Anzeige auf einer Anzeigefläche einer Anzeigevorrichtung (2) in einem Fahrzeug, bei dem
- Daten für die Anzeige eines Hintergrundbereichs (6) und Daten für die Anzeige in einem Teilbereich (9) der Anzeigefläche erzeugt werden,
- wobei als Anzeigeinhalt geographische Informationen angezeigt werden,
- wobei die Anzeige in dem Teilbereich (9) die Anzeige des Hintergrundbereichs (6) überdeckt und
- wobei der Anzeigeinhalt in dem Teilbereich (9) zumindest einen Teil des von dem Teilbereich (9) überdeckten Anzeigeinhalts des Hintergrundbereichs (6) in einem anderen Maßstab darstellt, als in dem Hintergrundbereich, und
- wobei in der Anzeige in Abhängigkeit von einem Eingangssignal, das auf der Basis einer Eingabe eines Nutzers erzeugt wird, der Anzeigeinhalt des Hintergrundbereichs (6) relativ zum Teilbereich (9) verschoben wird, wobei die Position des Teilbereichs (9) in der Anzeigefläche unverändert bleibt, und dabei der Anzeigeinhalt in dem Teilbereich (9) erneuert wird, so dass er bei der neuen Relativposition zwischen dem Teilbereich (9) und dem Anzeigeinhalt des Hintergrundbereichs (6) weiterhin zumindest einen Teil des von dem Teilbereich überdeckten Anzeigeinhalts des Hintergrundbereichs (6) in einem anderen Maßstab darstellt, als in dem Hintergrundbereich (6),
**dadurch gekennzeichnet,**
- **dass** Eingaben eines Nutzers zum Erzeugen eines Eingangssignals dadurch erfolgen, dass ein Objekt in die Nähe der Anzeigefläche gebracht wird, wobei die Position des Objekts erfasst wird,
- wobei das Eingangssignal in Abhängigkeit von dem Abstand des Objekts von der Anzeigefläche erzeugt wird, und
- wobei der Maßstab des Anzeigeinhalts in dem Teilbereich (9) oder dem Hintergrundbereich (6) dadurch verändert wird, dass man das Objekt dem jeweiligen Bereich der Anzeigefläche annähert, wobei der Maßstab des Anzeigeinhalts in dem jeweiligen Bereich mit zunehmender Annäherung des Objekts zunehmend vergrößert wird.

2. Verfahren nach Anspruch 1,
**dadurch gekennzeichnet,**
**dass** in Abhängigkeit von einem weiteren Eingangssignal die Größe und/oder die Form des Teilbereichs (9) verändert wird, wobei der Maßstab des Anzeigeinhalts in dem Teilbereich (9) unverändert bleibt.

3. Verfahren nach Anspruch 1,
**dadurch gekennzeichnet,**
**dass** in dem Teilbereich (9) eine geographische Detailkarte einer überdeckten geographischen Karte des Hintergrundbereichs (6) angezeigt wird.

4. Verfahren nach Anspruch 3,
**dadurch gekennzeichnet,**
**dass** die Detailkarte mehr Zusatzinformationen, als die Karte des Hintergrundbereichs enthält.

5. Verfahren nach Anspruch 3 oder 4,
**dadurch gekennzeichnet,**
**dass** die Detailkarte die Zusatzinformationen auf andere Art darstellt, als die Karte des Hintergrundbereichs.

6. Navigationssystem für ein Fahrzeug umfassend eine Steuervorrichtung zum Steuern der Anzeige auf einer Anzeigefläche einer Anzeigevorrichtung (2) in dem Fahrzeug mit
- einer Graphiksteuereinheit (1) zum Erzeugen von Daten für die Anzeige eines Hintergrundbereichs (6) und von Daten für die Anzeige in einem Teilbereich (9) der Anzeigefläche,
- wobei als Anzeigeinhalt geographische Informationen angezeigt werden,
- wobei die Anzeige in dem Teilbereich (9) die Anzeige des Hintergrundbereichs (6) überdeckt und
- wobei der Anzeigeinhalt in dem Teilbereich (9) zumindest einen Teil des von dem Teilbereich (9) überdeckten Anzeigeinhalts des Hintergrundbereichs (6) in einem anderen Maßstab darstellt als in dem Hintergrundbereich, und
- mit einer Eingabeeinheit (3; 4) für Eingaben eines Nutzers und zum Erzeugen eines Eingangssignals,
- wobei mit der Graphiksteuereinheit (1) in Abhängigkeit von einem Eingangssignal, das auf der Basis einer Eingabe eines Nutzers erzeugt wird, Anzeigedaten erzeugbar sind, die in der Anzeige den Anzeigeinhalt des Hintergrundbereichs (6) relativ zum Teilbereich (9) verschoben darstellen, wobei die Position des Teilbereichs (9) in der Anzeigefläche unverändert bleibt, und die Graphiksteuereinheit (1) dazu ausgestaltet ist, den Anzeigeinhalt für den Teilbereich (9) dabei zu erneuern, so dass er bei der neuen Relativposition zwischen dem Teilbereich (9) und dem Anzeigeinhalt des Hintergrundbereichs (6) weiterhin zumindest einen Teil des von dem Teilbereich (9) überdeckten Anzeigeinhalts des Hintergrundbereichs (6) in einem anderen Maßstab darstellt als in dem Hintergrundbereich (6),
**dadurch gekennzeichnet,**
- **dass** die Eingabeeinheit (3; 4) einen Näherungssensor umfasst, mit dem der Abstand eines Objekts von der Anzeigefläche erfassbar ist, wobei Eingaben eines Nutzers zum Erzeugen eines Eingangssignals dadurch erfolgen, dass ein Objekt in die Nähe der Anzeigefläche gebracht wird, wobei die Position des Objekts erfasst wird, und der Maßstab des Anzeigeinhalts in dem Teilbereich (9) oder dem Hintergrundbereich (6) dadurch verändert wird, dass das Objekt dem jeweiligen Bereich der Anzeigefläche angenähert wird, wobei die Graphiksteuereinheit (1) dazu ausgebildet ist, den Maßstab des Anzeigeinhalts in dem jeweiligen Bereich mit zunehmender Annäherung des Objekts zunehmend zu vergrößern.

7. Navigationssystem nach Anspruch 6,
**dadurch gekennzeichnet,**
**dass** mittels des Eingangssignals die Größe und/oder die Form des Teilbereichs (9) veränderbar ist.

8. Navigationssystem nach Anspruch 6,
**dadurch gekennzeichnet,**
**dass** die Eingabeeinheit (3; 4) eine Einrichtung zum Erfassen der Position eines Objekts oder mehrerer Objekte vor der Anzeigefläche innerhalb des Fahrzeugs umfasst.

9. Navigationssystem nach einem der Ansprüche 6 bis 8,
**dadurch gekennzeichnet,**
**dass** mittels der Graphiksteuereinheit (1) Anzeigedaten erzeugbar sind, die in dem Teilbereich (9) eine geographische Detailkarte einer überdeckten geographischen Karte des Hintergrundbereichs (6) darstellen.

## Claims

1. Method for controlling the display on a display surface of a display apparatus (2) in a vehicle, in which
- data for displaying a background area (6) and data for display in a section (9) of the display surface are generated,
- wherein geographical information is displayed as the display contents,
- wherein the display in the section (9) covers the display of the background area (6), and
- wherein the display contents in the section (9) represent at least part of the display contents of the background area (6) covered by the section (9) on a different scale than in the background area, and
- wherein the display contents of the background area (6) are shifted relative to the section (9) in the display on the basis of an input signal generated on the basis of an input by a user, wherein the position of the section (9) in the display surface remains unchanged and the display contents in the section (9) are updated in the process, with the result that, with the new relative position between the section (9) and the display contents of the background area (6), the display contents in the section still represent at least part of the display contents of the background area (6) covered by the section on a different scale than in the background area (6), **characterized in that**
- inputs by a user for generating an input signal are effected by bringing an object into the vicinity of the display surface, wherein the position of the object is detected,
- wherein the input signal is generated on the basis of the distance between the object and the display surface, and
- wherein the scale of the display contents in the section (9) or the background area (6) is changed by bringing the object closer to the respective area of the display surface, wherein the scale of the display contents in the respective area is increasingly enlarged as the object is brought increasingly closer.

2. Method according to Claim 1,
**characterized in that**
the size and/or the shape of the section (9) is/are changed on the basis of a further input signal, wherein the scale of the display contents in the section (9) remains unchanged.

3. Method according to Claim 1,
**characterized in that**
a geographical detailed map of a covered geographical map of the background area (6) is displayed in the section (9).

4. Method according to Claim 3,
**characterized in that**
the detailed map contains more additional information than the map of the background area.

5. Method according to Claim 3 or 4,
**characterized in that**
the detailed map represents the additional information in a different manner than the map of the background area.

6. Navigation system for a vehicle comprising a control apparatus for controlling the display on a display surface of a display apparatus (2) in the vehicle, having
- a graphics control unit (1) for generating data for displacing a background area (6) and data for display in a section (9) of the display surface,
- wherein geographical information is displayed as the display contents,
- wherein the display in the section (9) covers the display of the background area (6), and
- wherein the display contents in the section (9) represent at least part of the display contents of the background area (6) covered by the section (9) on a different scale than in the background area, and
- having an input unit (3; 4) for inputs by a user and for generating an input signal,
- wherein the graphics control unit (1) can be used to generate display data on the basis of an input signal generated on the basis of an input by a user, which display data represent the display contents of the background area (6) in a manner shifted relative to the section (9) in the display, wherein the position of the section (9) in the display surface remains unchanged, and the graphics control unit (1) is configured to update the display contents for the section (9) in the process, with the result that, with the new relative position between the section (9) and the display contents of the background area (6), the display contents for the section still represent at least part of the display contents of the background area (6) covered by the section (9) on a different scale than in the background area (6),
**characterized in that**
- the input unit (3; 4) comprises a proximity sensor which can be used to detect the distance between an object and the display surface, wherein inputs by a user for generating an input signal are effected by bringing an object into the vicinity of the display surface, wherein the position of the object is detected, and the scale of the display contents in the section (9) or the background area (6) is changed by bringing the object closer to the respective area of the display surface, wherein the graphics control unit (1) is designed to increasingly enlarge the scale of the display contents in the respective area as the object is brought increasingly closer.

7. Navigation system according to Claim 6,
**characterized in that**
the size and/or the shape of the section (9) can be changed using the input signal.

8. Navigation system according to Claim 6,
**characterized in that**
the input unit (3; 4) comprises a device for detecting the position of an object or a plurality of objects in front of the display surface inside the vehicle.

9. Navigation system according to one of Claims 6 to 8,
**characterized in that**
the graphics control unit (1) can be used to generate display data which represent a geographical detailed map of a covered geographical map of the background area (6) in the section (9).

## Revendications

1. Procédé de commande de l'affichage sur une surface d'affichage d'un dispositif d'affichage (2) dans un véhicule automobile, dans lequel
- des données destinées à l'affichage d'une zone d'arrière-plan (6) et des données destinées à l'affichage dans une zone partielle (9) de la surface d'affichage sont générées,
- dans lequel des informations géographiques sont affichées en tant que contenu d'affichage,
- dans lequel l'affichage recouvre l'affichage de la zone d'arrière-plan (6) dans la zone partielle (9) et
- dans lequel le contenu d'affichage représente dans la zone partielle (9) au moins une partie du contenu d'affichage de la zone d'arrière-plan (6) recouvert par la zone partielle (9) à une autre échelle que dans la zone d'arrière-plan, et
- dans lequel le contenu d'affichage de la zone d'arrière-plan (6) est décalé par rapport à la zone partielle (9) dans l'affichage en fonction d'un signal d'entrée qui est généré sur la base d'une entrée fournie par un utilisateur, dans lequel la position de la zone partielle (9) dans la surface d'affichage reste inchangée et de ce fait, le contenu d'affichage est renouvelé dans la zone partielle (9) de manière à ce qu'il représente en outre à la nouvelle position relative entre la zone partielle (9) et le contenu d'affichage de la zone d'arrière-plan (6) au moins une partie du contenu d'affichage de la zone d'arrière-plan (6) recouvert par la zone partielle à une autre échelle que dans la zone d'arrière-plan (6),
**caractérisé en ce que**
- les entrées fournies par un utilisateur pour générer un signal d'entrée s'effectuent en amenant un objet à proximité de la zone d'affichage de telle sorte que la position de l'objet soit détectée,
- dans lequel le signal d'entrée est généré en fonction de la distance de l'objet à la surface d'affichage, et
- dans lequel l'échelle du contenu d'affichage dans la zone partielle (9) ou la zone d'arrière-plan (6) est modifiée en rapprochant l'objet de la zone respective de la surface d'affichage de telle sorte que l'échelle du contenu d'affichage dans la zone respective soit augmentée de manière croissante lorsque le rapprochement de l'objet croît.

2. Procédé selon la revendication 1, **caractérisé en ce que** la taille et/ou la forme de la zone partielle (9) est modifiée en fonction d'un signal d'entrée supplémentaire, dans lequel l'échelle du contenu d'affichage reste inchangée dans la zone partielle (9).

3. Procédé selon la revendication 1, **caractérisé en ce qu'**une carte géographique détaillée d'une carte géographique recouverte de la zone d'arrière-plan (6) est affichée dans la zone partielle (9).

4. Procédé selon la revendication 3, **caractérisé en ce que** la carte détaillée contient davantage d'informations complémentaires que la carte de la zone d'arrière-plan.

5. Procédé selon la revendication 3 ou 4, **caractérisé en ce que** la carte détaillée représente les informations complémentaires d'une autre manière que la carte de la zone d'arrière-plan.

6. Système de navigation pour véhicule automobile comprenant un dispositif de commande destiné à commander l'affichage sur une surface d'affichage d'un dispositif d'affichage (2) dans le véhicule automobile, comprenant :
- une unité de commande graphique (1) destinée à générer des données pour l'affichage d'une zone d'arrière-plan (6) et des données destinées à l'affichage dans une zone partielle (9) de la surface d'affïchage,
- dans lequel des informations géographiques sont affichées en tant que contenu d'affichage,
- dans lequel l'affichage dans la zone partielle (9) recouvre l'affichage de la zone d'arrière-plan (6), et
- dans lequel le contenu d'affichage représente dans la zone partielle (9) au moins une partie du contenu d'affichage de la zone d'arrière-plan (6) recouvert par la zone partielle (9) à une autre échelle que dans la zone d'arrière-plan, et
- comprenant une unité d'entrée (3 ; 4) pour la fourniture en entrée par un utilisateur et destinée à générer un signal d'entrée,
- dans lequel, en fonction d'un signal d'entrée qui est généré sur la base d'une entrée fournie par un utilisateur au moyen de l'unité de commande graphique (1), il est possible de générer des données d'affichage qui représentent dans l'affichage le contenu d'affichage de la zone d'arrière-plan (6) par rapport à la zone partielle (9), dans lequel la position de la zone partielle (9) sur la surface d'affichage reste inchangée, et l'unité de commande graphique (1) est conçue pour renouveler ainsi le contenu d'affichage pour la zone partielle (9) de manière à ce qu'il représente en outre au moins une partie du contenu d'affichage de la zone d'arrière-plan (6) recouvert par le zone partielle (9) à la nouvelle position relative entre la zone partielle (9) et le contenu d'affichage de la zone d'arrière-plan (6) à une autre échelle que dans la zone d'arrière-plan (6),
**caractérisé en ce que**
- l'unité d'entrée (3 ; 4) comprend un capteur de proximité au moyen duquel la distance d'un objet à la surface d'affichage peut être détectée, dans lequel les entrées fournies par un utilisateur pour générer un signal d'entrée s'effectuent de telle manière qu'un objet soit amené à proximité de la surface d'affichage, dans lequel la position de l'objet est détectée, et l'échelle du contenu d'affichage dans la zone partielle (9) ou la zone d'arrière-plan (6) est modifiée en rapprochant l'objet de la zone respective de la surface d'affichage, dans lequel l'unité de commande graphique (1) est conçue de telle manière que l'échelle du contenu d'affichage dans la zone respective soit augmentée de manière croissante lorsque le rapprochement de l'objet croît.

7. Système de navigation selon la revendication 6, **caractérisé en ce que** la taille et/ou la forme de la zone partielle (9) peut être modifiée au moyen du signal d'entrée.

8. Système de navigation selon la revendication 6, **caractérisé en ce que en ce que** l'unité d'entrée (3 ; 4) comprend un dispositif destiné à détecter la position d'un objet ou de plusieurs objets situés en face de la surface d'affichage à l'intérieur du véhicule automobile.

9. Système de navigation selon l'une quelconque des revendications 6 à 8, **caractérisé en ce que**, au moyen de l'unité de commande graphique (1), il est possible de générer des données d'affichage qui représentent dans la zone partielle (9) une carte géographique détaillée d'une carte géographique recouverte de la zone d'arrière-plan (6).
